# FASCICULE DE BREVET EUROPEEN

(11) **EP 1 683 761 B1**
(45) Date de publication et mention de la délivrance du brevet: **13.03.2013**
(21) Numéro de dépôt: 06290068.3
(22) Date de dépôt: 10.01.2006
(51) Int. Cl.: C01B 39/48

(54) **Nouvelle methode de synthèse de la zéolite ZBM-30 à partir d'un mélange de composés aminés**
Neues Verfahren zur Herstellung von Zeolith ZBM-30 ausgehend von Aminverbindnugen
Novel method for the synthesis of zeolite ZBM-30 from a mixture of amine compounds

(30) Priorité: 24.01.2005 FR 0500712
(43) Date de publication de la demande: 26.07.2006
(73) Titulaire: Institut Français du Pétrole, 92852 Rueil Malmaison Cedex (FR)
(72) Inventeur: Hastoy, Gaelle, 94120 Fontenay sous Bois (FR); Martens, Johan, 3040 Huldenberg (BE); Guillon, Emmanuelle, 69390 Vernaison (FR)

(56) Documents cités:
- EP-A- 0 046 504
- US-B1- 6 713 041

## Description

### Domaine de l'invention

L'invention concerne la préparation de solides cristallins de type zéolithes.

L'homme du métier cherche à obtenir une meilleure cristallinité tout en cherchant une bonne incorporation de l'élément trivalent dans la structure zéolithique.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.

La zéolithe ZBM-30 ainsi que son procédé de préparation sont décrits dans le brevet EP-A-46504. Le solide ZBM-30 est synthétisé en présence d'une amine organique. La zéolithe possède un diagramme de diffraction DRX selon les pics suivants:

| d (A) | I/I0 |
|---|---|
| 11.60 | 36 |
| 10.82 | 15 |
| 5.80 | 11 |
| 4.18 | 100 |
| 3.87 | 79 |
| 2.84 | 16 |

Dans la demande de brevet EP1462166 A1, le solide ZBM-30 synthétisé en présence de triéthylènetétramine seule est particulièrement performant en hydroisomérisation de paraffines longues et pour la réduction du point d'écoulement de charges hydrocarbonées.

Dans la préparation de tels solides cristallins, notamment la ZBM-30, l'homme du métier cherche à obtenir une meilleure cristallinité tout en cherchant une bonne incorporation de l'aluminium dans la structure zéolithique.

Dans ces travaux de recherche, la demanderesse a découvert que de manière surprenante, la préparation d'une zéolithe de type ZBM-30 telle que décrite ci-dessus était facilitée par l'utilisation d'un structurant organique comportant le mélange d'au moins deux composés amines.

### Description sommaire de l'invention

L'invention porte sur un nouveau procédé de synthèse du solide zéolithique ZBM-30 synthétisée au moyen d'un mélange de deux composés amines.

Le procédé de préparation de l'invention est, par rapport à ceux présentées dans l'art antérieur, plus efficace et permet une meilleure incorporation de l'aluminium dans la structure zéolithique.

### Description détaillée de l'invention

La présente invention se rapporte à un nouveau procédé de synthèse du solide cristallisé, ZBM-30. Ledit solide présente une composition chimique exprimée sur une base anhydre, en termes de mole d'oxydes, définie par la formule générale suivante : mXO₂ : n Z₂O₃ : qᵢ Rᵢ : r M_{2/p} O dans laquelle M représente un ou plusieurs cations de valence p, Rᵢ représente un composé amine i avec i nombre entier supérieur ou égal à 2, X représente un ou plusieurs élément(s) tétravalent(s) différent(s), Z représente au moins un élément trivalent, m, n, r représentant respectivement le nombre de mole de XO₂, Z₂O₃ , M_{2/p}O et qᵢ le nombre de moles de Rᵢ.

La présente invention porte donc sur un procédé de synthèse de la zéolithe ZBM-30 comprenant:
i') une étape de mélange, sous agitation des sources de métaux tétravalents, trivalents, l'eau et deux composés amines pour former le gel final, avec une proportion de chaque composé amine de 50% poids, ou
i") une étape de mélange de deux gels précurseurs respectivement obtenus à partir de chacun des composés organiques amines en présence des sources de métaux tétravalents, trivalents et l'eau pour former le gel final, avec une proportion de chaque gel de 50% poids,
ii) une étape de cristallisation lors de laquelle on maintient ce gel dans des conditions permettant la formation d'un solide cristallin.

Les composés amines utilisés selon l'invention comprennent les alkylamines, alkyldiamines, alkylatriamines, alkylatétramines, alkylpentamines, alkylhexamines, pyrrolidine, piperazine, aminopipérazine et leurs dérivés.

De préférence, le composé organique amine comporte de 1 à 20 atomes de carbone.

Le métal tétravalent est compris dans le groupe formé par le silicium, le germanium. De préférence le métal tétravalent est le silicium.

Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX".

Le métal trivalent est compris parmi les métaux l'aluminium, le bore, le fer, le gallium, l'indium, le titane. De manière préférée, le métal trivalent choisi est l'aluminium.

Dans le cas préféré où le métal trivalent est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

M est un cation de valence p , de préférence M est un cation alcalin (groupe IA), de manière encore plus préféré M est un cation sodium.

La composition du mélange obtenue lors de l'étape i) peut être décrite comme suit :
mXO₂ : n Z₂O₃ : p H₂O : qᵢ R_{i :} r M_{2/p} O
- m = 100
- n entre 0 et 50
- p entre 0 et 160
- Σqi entre 0,05 et 20
- r entre 0 et 10

De préférence, aucun métal alcalin n'est introduit lors de la synthèse.

Le procédé de synthèse comporte une étape de mélange (i), lors de laquelle on prépare un mélange réactionnel comportant au moins une source de métal tétravalent, au moins une source une source de métal trivalent, de l'eau, et au moins deux composés amines jouant le rôle de structurant organique.

Cette étape de mélange i) peut être réalisée selon deux modes préférés selon l'invention :
a) 1^{er} mode de réalisation : l'étape i') est réalisée par mélange sous agitation des sources de métaux tétravalents, trivalents, de l'eau et de deux composés amines, pour former le gel final. L'ordre du mélange peut être variable.
   Selon une variante, les composés amines peuvent notamment être mélangés préalablement, puis le structurant organique formé par ce mélange est ajouté aux autres éléments du mélange réactionnel.
   Le gel final obtenu subit ensuite l'étape de cristallisation ii).
   La proportion de chaque composé amine est de 50% poids.
b) 2^{ème} mode de réalisation : l'étape i'') est réalisée par mélange de deux gels précurseurs respectivement obtenus à partir de chacun des composés organiques amines (intervenant respectivement comme structurant organique de chaque gel précurseur) en présence des sources de métaux tétravalents, trivalents et l'eau, pour former le gel final.
   Chaque gel précurseur est homogénéisé et laissé au repos en conditions statiques pour une durée de 0.5 à 48 heures, à une température comprise entre 0 et 200°C.
   Le mélange de chaque gel précurseur est réalisé à une température comprise entre 0 et 200°C sous agitation pour une durée comprise entre 5 et 60 minutes.

La proportion de chaque gel est de 50% poids.

Le procédé de synthèse selon l'invention comporte une étape de cristallisation ii) lors de laquelle on maintient le gel final obtenu lors de l'étape i) dans des conditions permettant la formation d'un solide cristallin.
Cette étape peut être réalisée selon toute méthode connue de l'homme de l'art, de préférence en autoclave. Le gel est avantageusement mis sous conditions hydrothermales sous une pression de réaction autogène, éventuellement en ajoutant du gaz, par exemple de l'azote .
Avantageusement, lors de l'étape ii) de cristallisation, on chauffe le mélange obtenu lors de l'étape i) à une température de cristallisation comprise entre 100 et 200°C, de préférence entre 135 et 175°C, pendant une durée de cristallisation comprise entre 0,5 et 60 jours, de préférence entre 1,5 et 20 jours. La durée nécessaire pour obtenir la cristallisation varie généralement entre 1 heure et plusieurs mois en fonction de la composition des réactifs dans le gel, de l'agitation et de la température de réaction. Le mélange réactionnel peut être vigoureusement agité ou pas pendant la durée de l'étape de cristallisation. De préférence, le mélange réactionnel est vigoureusement agité.
Il peut être avantageux d'additionner des germes zéolithiques au mélange réactionnel de l'étape i) afin de réduire le temps nécessaire à la formation des noyaux et/ou la durée totale de cristallisation et afin de favoriser la formation du solide cristallisé ZBM-30 au détriment d'impuretés. De préférence, les germes zéolithiques ajoutés comprennent en totalité ou en partie des cristaux de solide ZBM-30. Les germes zéolithiques sont généralement ajoutés dans une proportion comprise entre 0,01 et 10 % du poids de l'oxyde XO₂, de préférence de la silice, utilisée dans le mélange réactionnel.
A la fin de la réaction, la phase solide est filtrée et lavée; elle est ensuite prête pour des étapes ultérieures telles que le séchage, la déshydratation et la calcination et/ou l'échange d'ions. Pour ces étapes, toutes les méthodes conventionnelles connues de l'homme du métier peuvent être employées.
De préférence, le produit obtenu à l'étape ii) de cristallisation est soumis à au moins une des étapes suivantes :
iii) une étape de séparation du solide du mélange de cristallisation,
iv) une étape de lavage du solide, et
v) une étape de séchage dudit solide.

Le solide cristallisé est généralement séparé du mélange par toute méthode connue de l'homme de l'art telle que la filtration. Le solide est ensuite lavé à l'eau ou avec du THF (tétrahydrofurane)

L'étape v) de séchage est généralement réalisée à une température comprise entre 50 et 150°C pendant une durée allant de 12 à 30 heures.

Le séchage est réalisé à pression atmosphérique de préférence, mais peut être effectué sous pression.

De préférence, une étape d'échange ionique est réalisée à l'issue de la synthèse afin de mettre la zéolithe sous forme ammonium ou acide par toute technique d'échange ionique connue de l'homme du métier.

De préférence, une étape de calcination est conduite à l'issue de la synthèse afin notamment de révéler la porosité du solide zéolithique par décomposition des composés amines. Cette étape de calcination peut être avantageusement réalisée sous air (ou milieu oxydant), à une température comprise entre 300 et 800°C.

Le solide ZBM-30 ainsi préparé peut être utilisé comme catalyseur ou support de catalyseur pour des transformations d'hydrocarbures en raffinage et pétrochimie et tout particulièrement pour les réactions d'hydroisomérisation ou déparaffinage catalytique.

L'invention est illustrée au moyen des exemples suivants.

### Exemple 1: Préparation des gels précurseurs (synthèse de la ZBM-30 par mélange de gels)

Les gels précurseurs sont préparés selon les recettes de synthèse suivantes (décrites pour chaque composé organique amine) :
- Gel précurseur à base de triethylenetetramine : Une solution de triethylenetetramine de 23.0775 g (Acros 96%) dans 23.0775 g de H2O a été préparée. À cette solution 3.845 g d'aérosil (UCB 380 m²/g) ont été ajoutés sous agitation continue suivis de 0.082 g d'Al(OH)3 (Merck).
- Gel précurseur à base d'hexamethylenediamine : Une solution de hexamethylenediamine de 25 g (Acros 99.5%+) dans 25 g de H2O a été préparée. À cette première solution 4 g d'aérosil (UCB 380 m²/g) ont été ajoutés sous agitation continue, suivise de 0.065 g d'Al(OH)3 (Merck).
- Gel précurseur à base d'octylamine
   Solution A: à 6 g d'eau ont été ajoutés 0.85 g de de H2SO4 (Merck)
   solution B : à 20.5 g de H2O, 2.1 g du TMA-Br (Janssen) et 9.05 g d'octylamine (Aldrich 98%) ont été ajoutés.
   Solution C : 0.35 g d'Al(NO3)3 ont été dilués dans 5 g de H2O.
   La solution A et 9.35 g de water glass (composition massique 27% SiO₂, 8% Na₂O, 65% H₂O) ont été mélangés sous l'agitation vigoureuse, puis la solution B a été ajoutée suivie de la solution C.
- Gel précurseur à base de propylamine
   Solution A : 0. 034 g d'Al(OH)3 (Fluka 64/66%) ont été dilués dans 8.165 g de water glass (composition massique 27% SiO₂, 8% Na₂O, 65% H₂O) (Merck)
   Solution B: à 16.477 g d'eau ont été ajoutés 0.766 g de H2SO4 (Merck)
   Solution C : à 1.337 g de H2O et à 1.337 g de TMA-CI (Janssen) ont été ajoutés 18.268 g de H2O et 3.565 g de propylamine (Aldrich 98%).
   Les solutions A et B sont d'abord mélangées sous agitation vigoureuse, suivies de la solution C.
- Gel précurseur à base d'éthylenediamine
   À une solution de 0.0625 g de Na-aluminate (Riedel de Haën) et de 33.825 g de H2O, 5g d'aérosil (UCB 380 m²/g) ont été ajoutés sous l'agitation vigoureuse, suivis de 11.625 g d'éthylènediamine (Acros 99%).

### Exemple 2 : Synthèse de la ZBM-30 par mélange de gels précurseurs à température ambiante

Pour ce qui concerne le premier type de mélange de gels, la préparation de chaque gel précurseur individuel a été effectuée comme décrit dans l'exemple 1. Après la préparation, chaque gel précurseur est laissé à température ambiante pendant au moins 2 heures. Ensuite chaque gel précurseur est d'abord homogénéisé, et mélangé à un autre gel précurseur(dans un rapport 50/50 en poids) sous agitation pendant 10 minutes (tableau 1). Le gel résultant final est alors placé dans un autoclave garni de Téflon, et chauffé à 170°C sous agitation (tableau 1). Pour quelques mélanges de gel, des temps de synthèse différents ont été employés.

**Tableau 1 : "Mélange de gels vieillis à température ambiante " - synthèse de zéolithe**

| **Echantillon** | **Combinaison de structurants dans les deux gels** | **Si/Al gel** | **Temps de synthèse (jours)** |
|---|---|---|---|
| S1 | hexamethylenediamine + triethylenetetramine | 69 | 8 |
| S2 | hexamethylenediamine + triethylenetetramine | 69 | 4 |
| S3 | octylamine + triethylenetetramine | 67 | 8 |
| S4 | octylamine + ethylenediamine | 195 | 3 |
| S5 | ethylenediamine + hexamethylenediamine | 145 | 3 |
| S6 | ethylenediamine + hexamethylenediamine | 145 | 6 |
| S7 | ethylenediamine + hexamethylenediamine | 145 | 1.5 |
| S8 | ethylenediamine + hexamethylenediamine | 145 | 13 |
| S9 | octylamine + ethylenediamine | 195 | 1.5 |

### Exemple 3: Synthèse de la ZBM-30 par mélange de gels précurseurs à 100°C

Comme pour la méthode de mélange des gels décrite dans l'exemple 2, chaque gel précurseur a été préparé sur la base de la préparation décrite dans l'exemple 1. Les gels précurseurs sont vieillis séparément dans un autoclave d'acier inoxydable à 100°C pendant 24 heures sans agitation. Ensuite le chauffage est arrêté et les autoclaves refroidis dans un bain d'eau froide. Les gels précurseurs sont mélangés deux par deux (rapports de 50/50 % en poids) (tableau 2), lentement remués pendant 10 minutes, transférés dans un autoclave d'acier inoxydable, chauffés à 170°C et agités(tableau 2).

**Tableau 2 : Synthèse de zéolithe ZBM-30 par mélange de gels vieillis thermiquement**

| **Echanti llon** | **Combinaison de composés amines dans les deux gels** | **Si/Al du gel** | **Durée de synthèse (jours)** |
|---|---|---|---|
| S10 | Triéthylenetetramine + Hexamethylenediamine | 69 | 8 |
| S11 | Ethylenediamine + Propylamine | 189 | 3 |
| S12 | Triethylenetetramine + Propylamine | 68 | 8 |
| S13 | Triethylenetetramine + Octylamine | 67 | 8 |
| S14 | Triethylenetetramine + Ethylenediamine | 117 | 7 |
| S15 | Triethylenetetramine + Octylamine | 67 | 4 |
| S16 | Triethylenetetramine + Ethylenediamine | 117 | 4 |
| S17 | Triethylenetetramine + Pyrrolidine | 97 | 7 |
| S18 | Octylamine + Ethylenediamine | 195 | 5 |
| S21 | Triethylenetetramine + Hexamethylenediamine | 69 | 2 |

### Exemple 4 comparatif : Préparation de gel de ZBM-30 à l'aide d'un structurant organique sous forme de mélange de composés amines

### • Combinaison triethylenetetramine - pyrrolidine

Une solution de triethylenetetramine (46.155 g) (Acros 96%) et de pyrrolidine (23.08 g) (Fluka 99%) dans 46.155 g de H2O a été préparée. 7.69 g d'aerosil (UCB 380 g/m2) ont été ajoutés sous agitation continue suivis de 0.165 g de AI(OH)2 (Merck)

### • Combinaison triethylenetetramine - hexylamine

Une solution de triethylenetetramine (46.155 g) (Acros 96%) dans 46.155 g de H2O a été préparée. 7.69 g d'aerosil (UCB 380 g/m2) ont été ajoutés sous agitation continue suivis de 23.08 g de hexylamine (Aldrich 98%) et 0.165 g d'Al(OH)3 (Merck).

### Exemple 5 comparatif : synthèse de la ZBM-30 à l'aide d'un structurant organique sous forme de mélange de composés amines

Pour ce mode de synthèse, on utilise comme structurant organique un mélange de composés amines : le premier composé amine du mélange est la triéthylènetétramine, le second composé est soit la pyrrolidine, soit l'hexylamine. La quantité du second composé amine est égale à 50% poids de la quantité de triéthylènetétramine dans le gel. Les recettes de préparation du gel final pour chaque combinaison de composés amines sont décrites ci-dessous.

Les gels sont transférés dans des autoclaves d'acier inoxydable et chauffés à 170°C sous agitation (tableau 3). Pour chaque mélange de composés amines, deux temps de synthèse ont été employés.

**Tableau 3 : Synthèse de zéolithes à l'aide d'un structurant organique sous forme de mélange de composés amines**

| **Echanti lion** | **"Mélange de structurants"** | **Si/Al du gel** | **Durée de synthèse (jours)** |
|---|---|---|---|
| S19 | Triethylenetetramine + pyrrolidine | 60 | 7 |
| S20 | Triethylenetetramine + hexylamine | 60 | 7 |
| S22 | Triethylenetetramine + pyrrolidine | 60 | 3 |
| S23 | Triethylenetetramine + hexylamine | 60 | 3 |

### Exemple 6 comparatif : Composition en Si et Al d'un solide ZBM-30 préparé selon les exemples 4 et 5 (triéthylènetétramine + hexylamine en proportion 100:50 en poids) et d'un solide ZBM-30 synthétisé en présence de triéthylènetétramine seule

Le solide S20 est synthétisé selon l'exemple 5 avec un structurant organique sous forme de solution triéthylènetétramine + hexylamine (100% / 50% poids).

Le solide S24 est synthétisé selon le brevet EP-A-46504 avec le triéthylènetétramine comme unique structurant organique.

**Tableau 4 : Composition des solides**

| **Echantillon** | **Structurant organique** | **Si/Al gel** | **Durée de synthèse (jours)** | **Si/Al solide** |
|---|---|---|---|---|
| S20 | Triethylenetetramine + hexylamine | 60 | 7 | 56 |
| S24 | Triethylenetetramine | 60 | 7 | 65 |

La composition en Si et Al des solides post-synthèse est mesurée par fluorescence X et comparé à la composition Si, Al du gel initial.

A iso-composition de gel, le rapport Si/Al du solide final est inférieur lorsque le structurant organique est composé de deux amines. L'incorporation d'aluminium est donc meilleure dans le cas du mélange de composés amines.

## Revendications

1. Procédé de synthèse de la zéolithe ZBM-30 comprenant:
i') une étape de mélange, sous agitation des sources de métaux tétravalents, trivalents, l'eau et deux composés amines pour former le gel final, avec une proportion de chaque composé amine de 50% poids, ou
i") une étape de mélange de deux gels précurseurs respectivement obtenus à partir de chacun des composés organiques amines en présence des sources de métaux tétravalents, trivalents et l'eau pour former le gel final, avec une proportion de chaque gel de 50% poids,
ii) une étape de cristallisation lors de laquelle on maintient ce gel dans des conditions permettant la formation d'un solide cristallin.

2. Procédé selon la revendication 1 dans lequel les composés amines sont choisis parmi les alkylamines, alkyldiamines, alkylatriamines, alkylatétramines, alkylpentamines, alkylhexamines, pyrrolidine, piperazine, aminopipérazine et leurs dérivés.

3. Procédé selon l'une des revendications précédentes dans lequel les composés amines comportent de 1 à 20 atomes de carbone.

4. Procédé selon l'une des revendications précédentes dans lequel le métal tétravalent est compris dans le groupe formé par le silicium, le germanium.

5. Procédé selon l'une des revendications précédentes dans lequel le métal trivalent est compris dans le groupe formé par l'aluminium, le bore, le fer, le gallium, l'indium, le titane.

6. Procédé selon l'une des revendications 1 à 5 dans lequel, pour l'étape i'), les composés amines sont mélangés préalablement avant d'être ajoutés aux sources de métaux tétravalents, trivalents et l'eau.

7. Procédé selon l'une des revendications précédentes dans lequel lors de l'étape ii) de cristallisation, on chauffe le mélange obtenu lors de l'étape i') ou i") à une température de cristallisation comprise entre 100 et 200°C, pendant une durée de cristallisation comprise entre 0,5 et 60 jours, le mélange réactionnel étant vigoureusement agité ou pas pendant la durée de l'étape de cristallisation.

8. Procédé selon l'une des revendications précédentes dans lequel on ajoute des germes de zéolithe au mélange réactionnel de l'étape i') ou i").

9. Procédé selon la revendication 8 dans lequel les germes de zéolithe sont en partie ou en totalité des germes de zéolithe ZBM-30.

10. Procédé selon l'une des revendications précédentes dans lequel le produit obtenu à l'étape ii) de cristallisation est soumis à au moins une des étapes suivantes
iii) une étape de séparation du solide du mélange de cristallisation,
iv) une étape de lavage du solide, et
v) une étape de séchage dudit solide.

11. Procédé selon l'une des revendications précédentes dans lequel le produit obtenu à l'étape ii) de cristallisation est soumis à une étape de calcination.

## Claims

1. A process for the synthesis of solid zeolitic ZBM-30, comprising:
i') a mixing step, is carried out by mixing sources of a tetravalent metal, of a trivalent metal, water and at least two amine compounds with stirring to form the final gel, in which the number of amine compounds equals 2, with a proportion of each amine compound of 50% by weight, or
i") is carried out by mixing at least two precursor gels respectively obtained from each of the organic amine compounds in the presence of sources of a tetravalent metal, of a trivalent metal and water to form the final gel, in which the number of precursor gels equals 2, with a proportion of each gel of 50% by weight,
ii) a crystallization step, during which said gel is maintained under conditions allowing the formation of a crystalline solid.

2. A process according to claim 1, in which the amine compounds are selected from alkylamines, alkyldiamines, alkyltriamines, alkyltetramines, alkylpentamines, alkylhexamines, pyrrolidine, piperazine, aminopiperazine and derivatives thereof.

3. A process according to one of the preceding claims, in which the amine compounds comprise 1 to 20 carbon atoms.

4. A process according to one of the preceding claims, in which the tetravalent metal is included in the group formed by silicon and germanium.

5. A process according to one of the preceding claims, in which the trivalent metal is included in the group formed by aluminium, boron, iron, gallium, indium and titanium.

6. A process according to claims 1 to 5, in which, for step i'), the amine compounds are pre-mixed before being added to the sources of a tetravalent metal, of a trivalent metal and water.

7. A process according to one of the preceding claims, in which during crystallization step ii), the mixture obtained during step i') or i") is heated to a crystallization temperature in the range 100°C to 200°C, for a crystallization period in the range 0.5 to 60 days, the reaction mixture being vigorously stirred or not stirred during the duration of the crystallization step.

8. A process according to one of the preceding claims, in which zeolite seeds are added to the reaction mixture of step i') or i").

9. A process according to claim 8, in which the zeolite seeds are formed partially or completely from seeds of ZBM-30 zeolite.

10. A process according to one of the preceding claims, in which the product obtained in crystallization step ii) undergoes at least one of the following steps:
i) a step for separating the solid from the crystallization mixture;
ii) a step for washing the solid; and
iii) a step for drying said solid.

11. A process according to one of the preceding claims, in which the product obtained in crystallization step ii) undergoes a calcining step.

## Patentansprüche

1. Verfahren zur Herstellung des Zeolith ZBM-30 umfassend:
I') einen Schritt des Mischens unter Rühren von Quellen tetravalenter und trivalenter Metalle, Wasser und zweier Aminverbindungen zur Bildung eines Endgels, mit einem Anteil jeder Aminverbindung von 50 Gew.%, oder
I") einen Schritt des Mischens von zwei Vorläufergelen, die jeweils erhalten werden ausgehend von jeder der organischen Aminverbindungen in Gegenwart von Quellen tetravalenter und trivalenter Metalle und Wasser zur Bildung eines Endgels, mit einem Anteil jedes Gels von 50 Gew%,
II) einen Schritt der Kristallisation, währenddem das Gel unter Bedingungen aufrechterhalten wird, welche die Bildung eines festen Kristalls gestatten.

2. Verfahren nach Anspruch 1, wobei die Aminverbindungen ausgewählt sind aus: Alkylaminen, Alkyldiaminen, Alkyltriaminen, Alkyltetraminen, Alkylpentaminen, Alkylhexaminen, Pyrollidin, Piperazin, Aminopiperazin und deren Derivaten.

3. Verfahren nach einem der vorherigen Ansprüche, wobei die Aminverbindungen 1 bis 20 Kohlenstoffatome umfassen.

4. Verfahren nach einem der vorherigen Ansprüche, wobei das tetravalente Metall umfasst wird von der Gruppe, die aus Silizium und Germanium gebildet wird.

5. Verfahren nach einem der vorherigen Ansprüche, wobei das trivalente Metall umfasst wird von der Gruppe, die aus Aluminium, Bor, Eisen, Gallium, Indium und Titan gebildet wird.

6. Verfahren nach einem der Ansprüche 1 bis 5, wobei im Schritt I') die Aminverbindungen vorgemischt werden, bevor sie den Quellen tetravalenter und trivalenter Metalle und Wasser hinzugefügt werden.

7. Verfahren nach einem der vorherigen Ansprüche, wobei während Schritt II) der Kristallisation, das im Schritt I') oder I") erhaltene Gemisch auf eine Kristallisationstemperatur zwischen 100 und 200°C während einer Kristallisationsdauer zwischen 0,5 und 60 Tagen erhitzt wird, wobei das Reaktionsgemisch während der Dauer des Kristallisationsschritts kräftig gerührt wird oder nicht.

8. Verfahren nach einem der vorherigen Ansprüche, wobei dem Reaktionsgemisch des Schritts I') oder I") Zeolithkeime hinzufügt werden.

9. Verfahren nach Anspruch 8, wobei die Zeolithkeime teilweise oder vollkommen Keime des Zeoliths ZBM-30 sind.

10. Verfahren nach einem der vorherigen Ansprüche, wobei das in Schritt II) der Kristallisation erhaltene Produkt wenigstens einem der folgenden Schritte unterworfen wird:
III) einem Schritt der Abtrennung des Feststoffs aus dem Kristallisationsgemisch
IV) einem Schritt des Waschens des Feststoffs und
V) einem Schritt des Trocknens des Feststoffs.

11. Verfahren nach einem der vorherigen Ansprüche, wobei das in Schritt II) der Kristallisation erhaltene Produkt einem Schritt der Kalzinierung unterworfen wird.
